Europäisches Patentamt

European Patent Office

Office européen des brevets

(11) Publication number: **0 226 262 B1**

(12) **EUROPEAN PATENT SPECIFICATION**

(45) Date of publication of patent specification: **18.03.92** (51) Int. Cl.5: **A23L 3/34**, A23B 7/153, A23B 7/10

(21) Application number: **86300543.5**

(22) Date of filing: **28.01.86**

(54) **Method of treating potatoes, treated potatoes and containers having the potatoes therein.**

(30) Priority: **12.12.85 US 808400**

(43) Date of publication of application:
**24.06.87 Bulletin 87/26**

(45) Publication of the grant of the patent:
**18.03.92 Bulletin 92/12**

(84) Designated Contracting States:
**AT BE CH DE FR GB IT LI LU NL SE**

(56) References cited:
**GB-A- 2 019 192**
**GB-A- 2 036 533**
**US-A- 4 262 027**

**PATENT ABSTRACTS OF JAPAN, vol. 10, no. 17 (C-324)[2074], 23 January 1986**

**CHEMICAL ABSTRACTS, vol.90, no.13, March 1979, page 453, abstract no.102192q, Columbus, Ohio, US; D. LONERGAN et al.: "Evaluation of sauerkraut-like products from direct-acidification of cabbage"**

**PATENT ABSTRACTS OF JAPAN, vol. 8, no. 193 (C-241)[1630], 05 September 1984**

(73) Proprietor: **AMERICAN NATIONAL CAN COMPANY**
**8770 West Bryn Mawr Avenue**
**Chicago, Illinois 60631(US)**

(72) Inventor: **Buytendorp, Henry C.**
**24488 Woodland Avenue**
**Carey, IL 60013(US)**
Inventor: **Kopetz, Arnold A.**
**14 West Penny Road**
**Barrington, IL 60010(US)**
Inventor: **McIntyre, Deborah Jean**
**2236 W. Nichols, No. F**
**Arlington Heights, IL 60174(US)**

(74) Representative: **Harvey, David Gareth et al**
**Graham Watt & Co. Riverhead**
**Sevenoaks Kent TN13 2BN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

This invention relates generally to the field of processing potatoes. More specifically it relates to processing of potatoes by procedures which include treatment with dilute aqueous solutions of lactone-forming acids, ie aldonic acids, especially gluconic acid, to control discoloration by either preventing and/or reversing it by inhibiting enzymatic and/or oxidative discoloration reactions. The acids, as will be explained more fully hereinafter, normally exist as a mixture of acids and lactones.

From the moment of harvest, foods such as potato undergo progressive deterioration and preventive measures are often taken to prolong storage life. Food preservation techniques should retain the nutritional value and prolong the stability of the foods' organoleptic properties. By this is meant those properties or qualities of the foodstuff determinable by use of one or more of the human sense organs, the organoleptic qualities including texture, color, flavor and/or aroma.

One of the most common manifestations of deterioration deterioration occurs in certain foodstuffs that are prone to enzymatic and/or oxidative discoloration, such as potatoes, which begins when the foodstuff is harvested and accelerates when it is peeled or its skin cut, thus injuring the cells and exposing them to air without the natural protection of the skin. This initial discoloration is probably exclusively enzymatic in nature. Oxidative discoloration continues after the enzymes have been deactivated by blanching, frying or cooking. With potatoes, the latter type of discoloration appears to be associated principally with oxidation of a ferrous ion complex with o-dihydroxphenols to form the colored complex with the ferric ion.

Numerous agents have been employed in attempts to maintain the natural color of foodstuffs such as fruits, vegetables and cereal grains by preventing, retarding, controlling, reversing or otherwise inhibiting the development or retention of discoloration. These have included various acids such as acetic, citric and malic acids. However, such acids often impart an acid or sharp flavor to foods with which they are employed. This often detracts from the natural flavor of the food. Sodium pyrophosphate is also employed for this purpose, but it has an adverse influence on texture, resulting in a mealier product.

Sulfiting agents have been used for hundreds of years in the processing of foods, especially to retard or reverse discoloration. Sulfiting agents which heretofore have been generally regarded as safe include sulfur dioxide, sodium and potassium bisulfite, sodium and potassium metabisulfite and sodium sulfite. Despite the widespread use of sulfiting agents, it has long been recognised that they impart considerable, e.g. sulphurous, flavors and odors, which adversely affect the acceptance of foods with which they are employed. Recently they have been implicated as initiators of asthmatic attack and other adverse reactions in sensitive individuals. Additionally, the sodium containing agents add to the burden of hypertensive individuals. The Food and Drug Administration of the United States Government has recently proposed a ban on sulfiting agents for use in connection with potatoes, and a requirement for label declaration of uses of 10ppm or more for foodstuffs intended to be served or sold to the public.

The banning of sulfiting agents will have a direct impact on food service establishments especially restaurants, supermarkets and salad bars. It is the practice in such food distribution centers to spray the produce with aqueous sulfite solutions to maintain an attractive appearance of freshness by retarding or reversing discoloration. It will also be a problem for food processors and packagers who have long utilized sulfiting agents to inhibit deterioration, especially discoloration of raw foodstuffs or foods such as potatoes, which have been dehydrated, frozen, par-fried, fried, cooked or otherwise processed.

Sulfiting agents have been employed in a wide range of food products which are subject to discoloration including dried fruits, lettuce, potatoes, maraschino cherries, sauerkraut, pickled peppers, corn starch, hominy, fresh mushrooms, soup mixes, pizza and pie dough, fruit salad, grapes and other fruits, vegetables and cereal grains.

In view of the deficiencies aforesaid, there has been great interest in discovering an agent or agents which can be used to inhibit the deterioration of foodstuffs without detracting from the taste or appearance, and will at the same time be easy to use, inexpensive and non-toxic to humans.

It has now been discovered that the fresh appearance and natural color of potatoes can be maintained by contacting them with a dilute aqueous solution of a hydrolysis mixture of an aldonic and its lactones. The principal manifestation of the activity of the acid is that the potato does not discolor, and in some cases if an adverse color has already developed, the color will reverse. The word "contacting" is used herein in a broad sense to encompass treatments such as aqueous sprays, dips, washings, blanching, and soaking as well as such treatments as packaging in flexible or rigid containers in brines comprising dilute solutions of the selected acid and its lactones.

Aldonic acids have previously been used in the processing of foodstuffs, see for example GB-A-2036533 and GB-A-2019192, but not for the purposes disclosed herein.

According to the present invention, there is provided a method of preventing, retarding or reversing discoloration of potato, which method comprises contacting the potato with a hydrolysis mixture of an aldonic acid and its lactones or a precursor thereof in an amount which is effective to prevent, retard or reverse discoloration of the potato.

Also according to the present invention, there is provided a potato subject to discoloration, said potato having been contacted with a hydrolysis mixture of an aldonic acid and its lactones, preferably glucono-delta lactone, or with a precursor of any of them, in an amount which is effective to maintain the color of the foodstuff.

The invention further provides a container containing a potato subject to discoloration, said potato having been contacted with a hydrolysis mixture of an aldonic acid and its lactones, preferably glucono-delta lactone, or with a precursor of any of them, in an amount which is effective to maintain the color of the potato

In particular, the invention provides a method of controlling darkening of a peeled, sliced or cut potato by contacting it with a hydrolysis mixture of an aldonic acid and its lactones, preferably glucono-delta lactone, or with a precursor of any of them, in an amount effective to prevent darkening of the potato before it is further processed.

Furthermore, there is provided by this invention a method of controlling the color of the potato, which comprises contacting the potato with a hydrolysis mixture of an aldonic acid and its lactones, preferably glucono-delta lactone, or with a precursor of any of them, in an amount which is effective to maintain the color of the potato and to provide the potato with a pH lower than its natural pH but above 4.6, and thermally processing the potato to commercial sterility in a hermetic container while the potato is at the reduced pH to provide a commercially sterile potato whose controlled color, texture and flavour are acceptable.

The word "containers" as used herein refers to rigid, semi-rigid and flexible containers and packages whether sealed (hermetically or otherwise) or unsealed. The container may be formed from any of a variety of materials including, for example, paper, fiber, composite, metal (including foil), glass, plastic or combinations thereof. It may be as simple as a cardboard box or a thin plastic film wrapped around the potato or it may be more complex, such as a bubble pack or a container formed to nest separately each of several vegetables (i.e. potatoes) in one package. The containers may be sealed, for example, by folding, by adhesive, by heat sealing, by double-seaming or with a tie or drawstring.

The invention, is explained more fully hereinafter by way of example, and is useful with various forms of potatoes.

The acids which can be utilized in accordance with this invention are prepared for example by oxidation of sugars or aldoses, preferably from those having six carbon atoms, although they could be prepared from those having five carbon atoms. Those acids prepared from sugars having six carbon atoms are talonic, galactonic, idonic, gulonic, mannonic, gluconic, altronic and allonic (although currently these acids, with the exception of gluconic, may be unavailable commercially). These acids are respectively derived from their aldoses -- talose, galactose, idose, gulose, mannose, glucose, altrose and allose. Sugars having five carbon atoms are lyxose, xylose, arabinose and ribose.

Any suitable method or material can be employed to bring the hydrolysis mixture of the aldonic acid and its lactones into combination with the potato. While the acid might be added by itself (since the acid, when in contact with moisture or water in or of the potato will be converted to a mixture of the acid and its lactones), doing so currently does not appear practical. So far as we know, many aldonic acids are probably not commercially available in crystaline form or in food grade. This is the case with the preferred gluconic acid, however. These acids may be commercially availale in technical grade in aqueous solutions. For example, gluconic acid is so available in aqueous solutions stated to be about 50% (by weight) gluconic acid. These aqueous solutions of the acid are equilibrium mixtures of gluconic acid and its lactones, glucono-delta lactone and glucono-gamma lactone. Gluconic acid has a mild acid taste.

The preferred method for providing the hydrolysis mixture of the aldonic acid and its lactones to the potato is to combine the potato with a precursor of the aldonic acid. A precursor of the acid herein means a liquid, material or compound which adds the acid to, or forms or provides it in the potato with which it is combined. Again, when the acid contacts moisture or water naturally present in the potato, or on its surface, it will convert partially to and will co-exist with its lactones. Precursors of these acids which can be employed include their lactones themselves (which can be said to be latent acids since they hydrolyze in water to form a mixture of the acid and its lactones), mixtures of these lactones, and salts of the acids in combination with certain strong acids. For example, precursors of the preferred gluconic acid which can be employed include glucono-delta-lactone, glucono-gamma lactone, mixtures of these lactones, and gluconate salts in combination with a strong acid, such as hydrochloric. By far, the most preferred precursor for this invention is glucono-delta lactone (GDL). It is commercially available in food grade as a free-flowing, odorless, white powder. It has a sweet taste. Food grade solutions of GDL are also commercially available and can be employed. GDL is an inner ester of gluconic acid which when hydrolyzed forms gluconic acid. Hydrolysis occurs when GDL is combined with water for example that of an (aqueous) brine or in the potato. Hydrolysis of the glucono-delta lactone results in on equilibirum mixture of from about 55% to about 60% (by weight) gluconic acid and from about 45% to about 40% (by weight) of a mixture of glucono-delta lactone and glucono-gamma lactone. The rate of acid formation during hydrolysis is affected by the temperature, the pH value and concentration of the solution. Hydrolysis of delta lactones tends to be more rapid than hydrolysis of gamma lactones. In the absence of heat, hydrolysis tends to be slow. Heating the solution accelerates the hydrolysis reaction, and is the preferred method. Heating the foodstuff also has the same effect. Like results would he expected to occur with the use of lactones of other aldonic acids, e.g. galactono-delta lactone. For this invention, rapid hydrolysis through heating is preferred to help acidify the rapidly and thoroughly.

Examples of those salts which can be used in combination with certain strong acids (each suitable for food use), include sodium, potassium and calcium salts, for example, sodium, potassium and calcium gluconates. An example of an acid considered herein to be "strong" is one which will react with the acid salt and provide enough available hydrogen ions to form the desired aldonic acid and its lactones in the potato. Such an acid would be hydrochloric. Of course, the type, manner and/or amount of strong acid(s) employed should be such that in accordance with the objectives of this invention, a sharp, strong or objectionable acid taste is not imparted to the potato. If hydrochloric acid is used as the strong acid, all of it should be converted so that no such acid would remain, only some derived salt.

This invention should not be limited by its theory of operation. However, a possible explanation of the apparently unique ability of the aldonic acids to assist in the preservation of potato without imparting on objectionable acid taste is the ability of the acids to form an equilibrium mixture with their lactones in which a large proportion of the mixture is comprised of the lactones. Thus, aqueous mixtures containing the equilibrium mixtures provide a source of acid without at the same time requiring a large amount of the mixture to be present in the acid form. The initial source of the acid is the hydrolysis of the lactone. The continued supply of the acid is provided by the equilibrium hydrolysis. The sweet taste of the lactones further mollifies the already mild taste of the acid.

Other acids which have been recommended for this purpose are acetic, propionic, maleic, malic, lactic, tartaric and citric acids. These acids are incapable of forming a lactone. Therefore, these acids tend to impart a sharper taste to foodstuffs than aldonic acids with their lactones and these acids can contribute a significant acidic taste to the food, especially if used in large amounts.

Treatment with the processing medium of the invention may be effected promptly after harvesting or before, during or after any of the routine food processing techniques such as washing, peeling, slicing, cutting, blanching, dehydrating, freezing, cooking (e.g. par-frying, frying and partial cooking) irradiating or packaging. The treatment may be performed once or several times before the food reaches the consumer. As aforesaid, the food may be packaged in a container in a brine of the acid-lactone mixture.

It is preferred to contact the foodstuff (i.e. the potato) with the selected acid/lactone, which is usually an equilibrium mixture, promptly after the foodstuff has been peeled, cut, sliced or otherwise treated so that its cells are exposed to the atmosphere. The reason is that such treatment may sometimes be effective to reverse discoloration or to prevent or inhibit discoloraton through the subsequent processing steps. The further the discoloration has progressed, the more difficult it is to reverse it. Thus, it is preferred to treat the freshly peeled potato, most advantageously, as soon after peeling or cutting as possible. Many foods, particularly potatoes, may undergo several processing steps before they are ready for the consumer. These may include, for example; slicing, dehydrating, flaking, whipping and mashing. In each of these steps, the physical form of the potato is changed, the surface area is increased, and more cells are injured and exposed to the atmosphere. It is therefore, sometimes advisable to treat the thus altered potato with an agent of the invention at one or more of the processing steps subsequent to the initial treatment.

The specific amount of the hydrolysis mixture of the aldonic acids and their lactones which when applied to the potato will be effective to achieve the advantages of the invention with a specific substrate will vary appreciably in accordance with factors well understood by those skilled in the art including size; exposed surface area; time of treatment; the specific type of potato e.g. its density and buffering capacity, the length of time it is to be protected and the environment to which it will be exposed. Generally, it is sufficient to lightly coat the potato with the active solution, for example, by dipping. However, for some applications, longed exposure may be necessary, for example by soaking the potato or packaging it in a brine containing the mixture.

It is convenient to employ dilute solutions containing the hydrolysis mixtures at a solids concentration of about 0.1% to 2% by weight, although appreciable variation from this range may be employed without

4

adverse effect. Solutions lower than about 0.05% are generally too dilute to be practically effective. Above about 5%, the solutions are not cost effective. The processing is normally conducted at ambient temperature, i.e. about 50° to 70°F.(10-21°C). However, higher temperatures, i.e. above 110°F (43°C) and even as high as 180°F (82° C) or higher may be employed. The higher temperatures have generally been found useful to reverse discoloration in potatoes. It has been observed that 1% solution of gluconic acid and its lactones at 180°F (82°C) will reverse the discoloration of cut raw potatoes and return them to their natural color.

This invention is of particular importance to the potato industry. Discoloration of freshly peeled or cut raw potatoes results from enzymatic oxidation in injured cells when they are exposed to air. This darkening of the raw tubers is believed to be due to enzymatic oxidation of tyrosine to melanine. Discoloration after cooking is also a problem. It is generally accepted that such darkening is due to the formation of a dark colored complex formed between o-dihydroxyphenols and ferric iron. The complex is formed by air oxidation of the corresponding ferrous iron complex normally present in potatoes. Heretofore, the art has sought to deal with the problem utilizing antioxidants or with various sulfiting agents. These agents have been unsatisfactory for reasons discussed above.

It has been found that the process of this invention is useful in maintaining color by preventing or retarding discoloration of potatoes in all commercial forms of the product. Potatoes and processed potatoes appear in the marketplace in many processed forms. This invention is useful in the preparation of any or all such processed products. The principal commercial potato products are frozen, dehydrated, cooked, sliced, diced, par-fried, french fried, and home fried potatoes as well as potato chips. The process of the invention is especially valuable for the preparation of these products, as well as canned products containing potatoes, for example, stews, hashes, soups, potato salads, etc.

The novel methods of this invention will be employed to produce novel foodstuffs characterized by the presence of a hydrolysis mixture of the said aldonic acids and their lactones. Such foodstuffs (ie potatoes) may be said to "contain" the acids and lactones, although the methods of containment may vary. The foodstuffs may contain the acid-lactone mixture because the foodstuff packaged is in a brine of the mixture. They may also contain the mixture because the liquid carrier of the mixture has evaporated, leaving a surface film of the mixture. Porous foodstuffs may contain the mixture because the acid and lactones have actually been absorbed into the body of the substrate.

Potato and potato products processed in accordance with this invention can thereafter be thermally processed to commercial sterility, for example, to obtain an equilibrium pH of 4.6 or below, (e.g. between 4.6 and the natural pH of the product).

The following examples are given by way of illustration of this invention.

EXAMPLE 1

Raw Idaho white potatoes were peeled and cut into approximately 3/4" (2 cm) cubes and allowed to discolor in air for 30 minutes. The cubes were divided into 5 lots and each lot was placed in a glass beaker. Four of the beakers were then filled over the level of the potatoes with one of the following hot aqueous solutions: 1.5% sodium bisulfite (pH = 5.6), 1.5% citric acid (pH = 2.2), 1.5% glucono delta lactone (pH = 2.4), and with plain hot water as a control soaking solution. A fifth beaker was filled with raw untreated potatoes. The temperature of the liquids was approximately 180°F (82° C) at the time of addition. After five minutes of soaking, the liquids were drained and pH of the decanted liquid was measured. The color and flavor of the potato cubes was then evaluated. The results are shown in Table I. The drained potatoes were allowed to remain in the beakers for four additional hours at room temperature, exposed to air. Observations of the resistance of the soak-treated potato cubes were made periodically and the significant results recorded as summarized in Table II. The untreated cubes continued to discolor greatly with time. The cubes treated with hot water began to discolor within 30 minutes and were quite brown after 4 hours. The cubes treated with the three chemical soaks all resisted discoloration after 4 hours of exposure to air, but after 24 hours, only the sodium bisulfite treated cubes were still white. In regard to flavor, as listed in Table I, the GDL treated cubes were markedly superior to the other chemically soaked cubes.

TABLE I

| Five Minute Soak of Idaho Potatoes Discolored for 30 Minutes | | | |
|---|---|---|---|
| | Color | Flavor | Solution pH |
| Water | White-Slightly Grey | Slightly less starchy than untreated | -- |
| 1.5% NaHSO$_3$ | White-Slightly Yellowish | Sulfurous | 5.7 |
| 1.5% Citric Acid | White | Lemony | 2.9 |
| 1.5% GDL | White | Slightly less starchy than untreated | 3.1 |
| Untreated | Reddish Discoloration | Normal raw potato Starchy | -- |

TABLE II

| Resistance to Discoloration of Soaked Potatoes - Drained | | |
|---|---|---|
| | 4 Hours | 24 Hours |
| Water | Dark brown | Very dark |
| 1.5% NaHSO$_3$ | White - Slightly Yellowish | White |
| 1.5% Citric Acid | White | Dark |
| 1.5% GDL | White | Dark |
| Untreatead | Very dark grey | Very dark |

EXAMPLE 2

Unblanched peeled, diced Wisconsin potatoes with an average pH of 5.6 are allowed to discolor by exposure to air for 30 minutes. The potatoes for the Reference Sample are dipped in a 0.2% solution of sodium bisulfite, but the potatoes for the GDL brine sample are not so dipped. The potatoes are then hand-filled into metal cans (303 x 406) (8.1 x 11.6 cm) to an aim weight of 10.3 ounces (291 g). A brine consisting of 0.9% salt and 0.05% of calcium chloride is heated at 180°F (82°C) and added to the Reference Sample cans shown in Table III. For the GDL Sample, a brine is prepared using 0.2% GDL in water heated to 180°F (82°C) with a salt and calcium chloride concentrate added to give the same salt concentration as the Reference Sample. The cans are topped, atmospherically hermetically closed and thermally processed in a still retort according to the conditions listed in Table XII. The thermal process at 250°F (121°C) for diced potatoes at pH above 5.2 is 15 minutes for a 303 x 406 (8.1 x 11.6 cm) can to achieve commercial sterility. While the 0.2% GDL brine reduces the pH somewhat below 5.6, the same full process is given all samples to assure commercial sterility.

Examination of the canned product shows that the GDL containing brine reverses the discoloration of the potatoes in the cans during the process. The color of the potatoes and brines are similar in all samples. The texture of the GDL sample is comparable to the Reference Sample, but both are slightly soft, and neither has a noticeable acid flavor. Commercially, a dip in sodium bisulfite solution is used to prevent discoloration of diced potatoes prior to canning, as in the Reference Sample, but no sulfites are used in preparing the GDL Sample in this experiment.

As summarized in Table IV, the simple 0.2% addition of GDL to the potato brine prior to canning will produce a product of equal quality to that where harmful sulfites are used to prevent discoloration.

TABLE IV

|  | Reference Sample | GDL Sample |
|---|---|---|
| Thermal Process Temp. ° F | 250 (121 ° C) | 250 (121 ° C) |
| Thermal Processing Time, minutes | 15 | 15 |
| pH of Canned Potatoes | 5.6 | 5.2-5.4 |
| Texture | Slightly soft | Slightly soft |
| Color | Yellowish-white | Yellowish-white |
| Flavor | Cooked potato | Very slight loss of flavor - No acid flavor |
| Brine | Yellowish-white | Yellowish-white |

Example 2 and Table IV show that the processing medium of this invention is effectively substitutable for sulfiting agents such as sodium bisulfite for controlling discoloration, and shows that the process of this invention can be employed with respect to foodstuffs before they are thermally processed to commercial sterility, at a pH whether or not the - is above 4.6.

**Claims**

1. A method of preventing, retarding or reversing discoloration of potato, which method comprises contacting the potato with an hydrolysis mixture of an aldonic acid and its lactones or a precursor thereof in an amount which is effective to prevent, retard or reverse discoloration of the potato.

2. A method of claim 1, wherein the aldonic acid is gluconic acid.

3. A method according to claim 1, wherein the potato is processed potato selected from frozen, dehydrated, cooked, sliced, cut, diced, par fried, french fried, and home fried potatoes and potato chips, and contact with said hydrolysis mixture or precursor thereof is effected at at least one of the steps employed in the production of the processed potato.

4. Potato subject to oxidative or enzymatic degradation, the said potato having been contacted with an hydrolysis mixture of an aldonic acid and its lactones or a precursor thereof in an amount which is effective to prevent, retard or reverse discoloration of the foodstuff.

5. Potato according to claim 4, wherein the potato is processed potato selected from frozen, dehydrated, cooked, sliced, diced, par fried, french fried, and home fried potatoes and potato chips.

6. A container containing potato subject to oxidative or enzymatic degradation said potato having been contacted with an hydrolysis mixture of an aldonic acid and its lactones or a precursor thereof in an amount which is effective to prevent, retard or reverse discoloration of the potato.

7. A container according to claim 6, wherein the potato is processed potato selected from frozen, dehydrated, cooked, sliced, cut, diced, par fried, french fried, and home fried potatoes and potato chips.

8. A container according to either of claims 6 and 7 which is sealed.

9. A method according to claim 1 or 2, wherein the mixture is in an aqueous solution and comprises from about 0.05% to 5% of the solution.

10. Potato according to claim 4, or a container according to claim 6, wherein the mixture is in an aqueous solution and comprises from about 0.05% to 5% of the solution.

11. The use of a hydrolysis mixture of an aldonic acid and its lactones or a precursor thereof in preventing, retarding or reversing discolouration of potato.

**Revendications**

1. Procédé pour empêcher, retarder ou inverser le processus d'altération de couleur de pommes de terre, lequel procédé consiste à mettre les pommes de terre en contact avec un mélange d'hydrolyse d'un acide aldonique et de ses lactones ou avec un précurseur de celui-ci, dans une quantité qui est efficace pour empêcher, retarder ou inverser le processus d'altération de couleur des pommes de terre.

2. Procédé selon la revendication 1, dans lequel l'acide aldonique est l'acide gluconique.

3. Procédé selon la revendication 1, dans lequel les pommes de terre sont des pommes de terre traitées, choisies parmi les pommes de terre surgelées, déshydratées, cuites, coupées en tranches, découpées, coupées en cubes, pré-frites, frites à la française, frites à la maison et les chips, et la mise en contact avec ledit mélange d'hydrolyse ou un précurseur de celui-ci est effectuée dans l'une au moins des étapes de la production des pommes de terre traitées.

4. Pommes de terre sujettes à la dégradation enzymatique ou par oxydation, ces pommes de terre ayant été mises en contact avec un mélange d'hydrolyse d'un acide aldonique et de ses lactones ou avec un précurseur de celui-ci, dans une quantité qui est efficace pour empêcher, retarder ou inverser le processus d'altération de couleur du produit alimentaire.

5. Pommes de terre selon la revendication 4, lesquelles pommes de terre dont des pommes de terre traitées, choisies parmi les pommes de terre surgelées, déshydratées, cuites, coupées en tranches, découpées, coupées en cubes, pré-frites, frites à la française, frites à la maison et les chips.

6. Récipient contenant des pommes de terre sujettes à la dégradation enzymatique ou par oxydation, ces pommes de terre ayant été mises en contact avec un mélange d'hydrolyse d'un acide aldonique et de ses lactones ou avec un précurseur de celui-ci, dans une quantité qui est efficace pour empêcher, retarder ou inverser le processus d'altération de couleur des pommes de terre.

7. Récipient selon la revendication 6, dans lequel les pommes de terre sont des pommes de terre traitées, choisies parmi les pommes de terre surgelées, déshydratées, cuites, coupées en tranches, découpées, coupées en cubes, pré-frites, frites à la française, frites à la maison et les chips.

8. Récipient selon la revendication 5 ou 7 qui est hermétiquement fermé.

9. Procédé selon la revendication 1 ou 2, dans lequel le mélange est en solution aqueuse et constitue de 0,05% à 5% environ de la solution.

10. Pommes de terre selon la revendication 4 ou récipient selon la revendication 6, dans lesquelles le mélange est en solution aqueuse et constitue de 0,05% à 5% environ de la solution.

11. Utilisation d'un mélange d'hydrolyse d'un acide aldonique et de ses lactones ou d'un précurseur de celui-ci pour empêcher, retarder ou inverser le processus d'altération de couleur de pommes de terre.

**Patentansprüche**

1. Ein Verfahren zum Verhindern, Hemmen oder Beseitigen von Verfärbung von Kartoffeln, wobei das Verfahren umfaßt, daß die Kartoffel mit einem Hydrolysegemisch aus einer Aldonsäure und ihren Lactonen oder einer Vorstufe derselben in einer Menge in Kontakt gebracht wird, die wirksam ist, Verfärbung der Kartoffel zu verhindern, zu hemmen oder zu beseitigen.

2. Ein Verfahren nach Anspruch 1, bei dem die Aldonsäure Gluconsäure ist.

3. Ein Verfahren nach Anspruch 1, bei dem die Kartoffel eine verarbeitete Kartoffel ist, die aus gefrorenen, dehydratisierten, gekochten, in Scheiben geschnittenen, durchgeschnittenen, gewürfelten und durchgebratenen Kartoffeln, Pommes frites und nach Hausfrauenart gebratenen Kartoffeln und Kartoffel-chips ausgewählt ist, und der Kontakt mit dem besagten Hydrolysegemisch oder der Vorstufe desselben bei wenigstens einem der bei der Herstellung der verarbeiteten Kartoffel angewendeten Verfahrensschritte durchgeführt wird.

4. Kartoffel, die zu oxidativer oder enzymatischer Degradation neigt, wobei diese Kartoffel mit einem Hydrolysegemisch aus einer Aldonsäure und ihren Lactonen oder einer Vorstufe derselben in einer Menge kontaktiert worden ist, die wirksam ist, um Verfärbung des Lebensmittels zu verhindern, zu hemmen oder zu beseitigen.

5. Kartoffel nach Anspruch 4, wobei die Kartoffel eine verarbeitete Kartoffel ist, die aus gefrorenen, dehydratisierten, gekochten, in Scheiben geschnittenen, gewürfelten und durchgebratenen Kartoffeln, Pommes frites und nach Hausfrauenart gebratenen Kartoffeln und Kartoffel-chips ausgewählt ist.

6. Ein Behälter, der Kartoffeln enthält, die zu oxidativer oder enzymatischer Degradation neigen, wobei diese Kartoffeln mit einem Hydrolysegemisch aus einer Aldonsäure und ihren Lactonen oder einer Vorstufe derselben in einer Menge in Kontakt gebracht worden sind, die wirksam ist, um Verfärbung der Kartoffeln zu verhindern, zu hemmen oder zu beseitigen.

7. Ein Behälter nach Anspruch 6, bei dem die Kartoffeln verarbeitete Kartoffeln sind, die aus gefrorenen, dehydratisierten, gekochten, in Scheiben geschnittenen, durchgeschnittenen, gewürfelten und durchgebratenen Kartoffeln, Pommes frites und nach Hausfrauenart gebratenen Kartoffeln und Kartoffel-chips ausgewählt sind.

8. Ein Behälter nach einem der Ansprüche 6 und 7, der versiegelt ist.

9. Ein Verfahren nach Anspruch 1 oder 2, bei dem das Gemisch in einer wässrigen Lösung vorliegt und etwa 0,05% bis 5% der Lösung umfaßt.

10. Kartoffeln nach Anspruch 4 oder ein Behälter nach Anspruch 6, bei denen das Gemisch als eine wässrige Lösung vorliegt und etwa 0,05% bis 5% der Lösung umfaßt.

11. Verwendung eines Hydrolysegemisches aus einer Aldonsäure und ihren Lactonen oder einer Vorstufe derselben zum Verhindern, Hemmen oder beseitigen von Verfärbung von Kartoffeln.